# FASCICULE DE BREVET EUROPEEN

(11) **EP 1 395 759 B1**
(45) Date de publication et mention de la délivrance du brevet: **08.03.2006**
(21) Numéro de dépôt: 02745522.9
(22) Date de dépôt: 13.06.2002
(51) Int. Cl.: F16C 39/06

(54) **PALIER MAGNETIQUE ACTIF A DETECTEURS INTEGRES**
AKTIVES MAGNETLAGER MIT INTEGRIERTEN SENSOREN
ACTIVE MAGNETIC BEARING WITH INTEGRATED DETECTORS

(30) Priorité: 15.06.2001 FR 0107914
(43) Date de publication de la demande: 10.03.2004
(73) Titulaire: SOCIETE DE MECANIQUE MAGNETIQUE, F-27950 Saint-Marcel (FR)
(72) Inventeur: BRUNET, Maurice, F-27950 Sainte Colombe près Vernon (FR); SCHROEDER, Ulrich, F-76130 Mont Saint-Aignan (FR)
(74) Mandataire: Thévenet, Jean-Bruno
(86) Numéro de dépôt international: PCT/FR2002/002022
(87) Numéro de publication internationale: WO 2002/103216

(56) Documents cités:
- FR-A- 2 768 470
- US-A- 5 209 631
- US-A- 5 572 079

## Description

La présente invention a pour objet un palier magnétique actif à flux magnétique radial pour une machine tournante présentant un axe de rotation OO', le palier magnétique comprenant un stator équipé de bobines d'électroaimants et d'un premier empilage de tôles ferromagnétiques essentiellement perpendiculaires à l'axe OO', un rotor équipé d'un deuxième empilage de tôles ferromagnétiques essentiellement perpendiculaires à l'axe de rotation OO', des circuits d'asservissement pour maintenir en équilibre le rotor sans contact avec le stator et au moins un détecteur de la position radiale du rotor et au moins un détecteur de la position axiale du rotor, lesquels détecteurs de position radiale et de position axiale délivrent auxdits circuits d'asservissement des signaux à partir desquels le courant dans les électroaimants du stator est asservi.

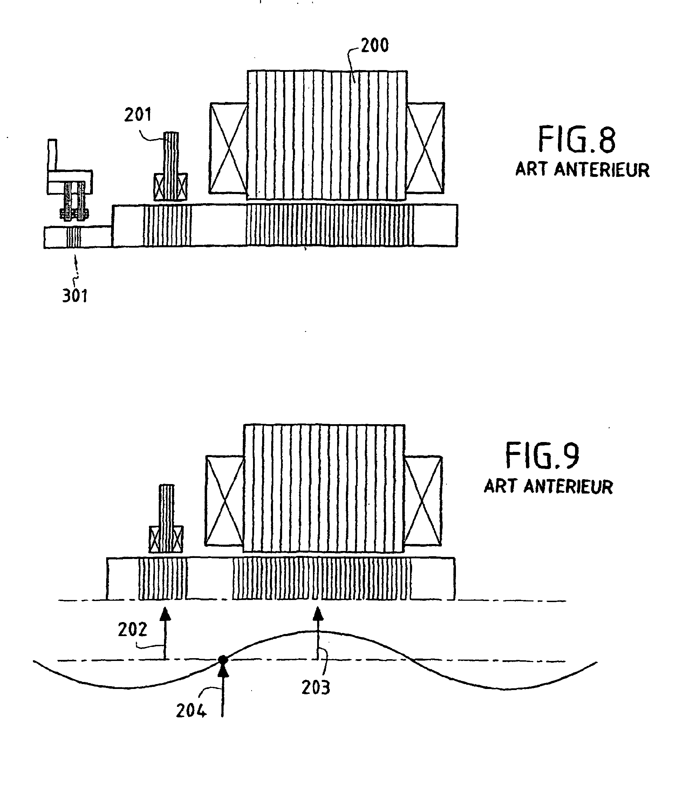

La majorité des applications qui utilisent des paliers magnétiques sont conformes au concept illustré sur la figure 8. Ce concept correspond à une séparation nette des différents constituants et notamment d'un palier magnétique radial 200, d'un détecteur de position radiale 201 et d'un détecteur de position axiale 301.

Dans certains cas, comme décrit par exemple dans le document FR 2 632 451, le dispositif comprend des premier et second détecteurs radiaux disposés respectivement au voisinage d'un palier magnétique radial et d'un palier magnétique conique et s'étendant autour du rotor sur un secteur angulaire de 180°. Un tel dispositif comprend en outre un détecteur axial s'étendant autour du rotor sur un secteur angulaire de 180° au plus et disposé au voisinage du palier magnétique conique sensiblement dans le même plan radial que le second détecteur radial. Ainsi, des détecteurs axiaux et radiaux sont combinés et utilisent la même couronne de tôles du rotor. Ces détecteurs ne sont toutefois pas intégrés à un palier.

Dans d'autres cas tels que décrits par exemple dans le brevet FR 2 094 326, les détecteurs radiaux sont intercalés entre les paliers radiaux, mais la détection axiale reste indépendante.

Dans chacun de ces cas, la juxtaposition des empilages paliers, détecteurs radiaux et détecteurs axiaux conduit à un système où la longueur de l'ensemble de la fonction palier est importante et où la dynamique du rotor est problématique.

Par ailleurs, comme on peut le voir sur la figure 9, la non-collocation, c'est-à-dire la non-coïncidence du point de détection radiale 202 avec le point de réaction 203 du palier radial complique notablement la définition de l'asservissement de contrôle. Des déformations dues à la conception mécanique du rotor peuvent faire en sorte que des noeuds 204 sont situés entre le palier radial 200 et le détecteur radial 201, de telle manière qu'il se produit des renversements de phase entre la détection et la réaction, ce qui induit des réactions erronées de la part du palier magnétique.

La présente invention vise à remédier aux inconvénients précités et en particulier à permettre la réduction de la longueur des machines tournantes, grâce à la mise en oeuvre d'ensembles de paliers magnétiques plus compacts.

Un autre but de la présente invention est d'éviter la non-coïncidence des points de détection et de réaction dans une suspension magnétique active d'un rotor.

Ces buts sont atteints grâce à un palier magnétique du type défini en tête de la description, caractérisé en ce que, conformément à l'invention, le premier empilage de tôles ferromagnétiques du stator comprend successivement dans le sens axial, au moins un premier sous-ensemble de tôles présentant des premières encoches intégrant des enroulements d'électroaimant du stator, un deuxième sous-ensemble de tôles présentant à la fois des premières encoches intégrant des enroulements d'électroaimant du stator et des deuxièmes encoches intégrant un détecteur radial et un troisième sous-ensemble de tôles présentant des premières encoches intégrant des enroulements d'électroaimant du stator, et en ce que le premier empilage de tôles ferromagnétiques du stator comprend en outre à ses extrémités axiales des quatrième et cinquième sous-ensembles de tôles présentant chacun des mêmes encoches intégrant respectivement des premier et deuxième détecteurs axiaux.

Avantageusement, la détection de la position du rotor par les détecteurs de position coïncide au même point que la réaction du palier magnétique actif.

Selon une caractéristique de la présente invention, le deuxième empilage de tôles du rotor s'étend sur une longueur axiale légèrement plus grande que celle du premier empilage de tôles du stator.

Selon une autre caractéristique, le rotor comprend une bague massive non magnétique située de chaque côté du deuxième empilage de tôles du rotor.

Les bagues non magnétiques peuvent être en acier, bronze ou aluminium.

Selon un mode de réalisation de l'invention, chaque détecteur de position axiale ou radiale comprend un jeu de plusieurs éléments de détection.

Selon un mode particulier de réalisation, chaque détecteur de position axiale ou radiale comprend un jeu de quatre éléments de détection.

Les éléments de détection peuvent être des enroulements de type inductif.

Selon une caractéristique de la présente invention, les défauts de parallélisme des plans entre les tôles du deuxième empilage de tôles et les bagues non magnétiques sont moyennés grâce à la mise en série des éléments de détection de chaque détecteur axial.

Avantageusement, la détection de la position axiale est définie au même endroit que la détection radiale.

Selon un aspect de l'invention, les éléments de détection d'un détecteur axial sont montés en pont avec les éléments de détection de l'autre détecteur axial.

Selon un autre aspect, la fréquence de l'oscillateur *f*_{*d*} excitant les détecteurs est découplée de la fréquence *f*_{*p*} du courant alimentant les électro-aimants du palier magnétique.

De préférence, le découplage est réalisé en synchronisant la fréquence d'excitation des détecteurs *f*_{*d*} et la fréquence *f*_{*p*} d'alimentation des électro-aimants du palier magnétique dans un rapport 1 à 2, de telle sorte que *f*_{*d*} = *f*_{*p*}*l* 2.

A titre d'exemple, le découplage est réalisé en alimentant les paliers magnétiques à travers des filtres.

Selon une autre caractéristique de la présente invention, l'épaisseur des tôles du deuxième empilage de tôles est comprise entre 0,1*mm* et 0,2*mm*.

Selon un premier mode particulier de réalisation, le palier magnétique actif est de type radial.

Selon un autre mode de réalisation, le palier magnétique actif est de type conique à action radiale et axiale.

D'autres caractéristiques et avantages de l'invention ressortiront de la description qui suit de modes particuliers de réalisation, donnés à titre d'exemples, en référence aux dessins annexés sur lesquels :
- la figure 1 est une vue en demi-coupe axiale d'un exemple de réalisation d'un palier magnétique actif conforme à l'invention,
- la figure 2 est une vue d'un palier magnétique actif montrant sur la demi-coupe axiale du haut, des enroulement de palier et, sur la demi-coupe du bas, un détecteur radial et deux détecteurs axiaux délivrant des signaux à un circuit d'asservissement,
- la figure 2A est une vue suivant la ligne IIA-IIA de la figure 2, montrant une découpe de tôles du stator présentant des premières encoches pour la fonction palier radial,
- la figure 2B est une vue suivant la ligne IIB-IIB de la figure 2, montrant une découpe de tôles du stator présentant à la fois des premières encoches pour la fonction palier radial et des deuxièmes encoches pour la fonction détecteur radial,
- la figure 2C est une vue suivant la ligne IIC-IIC de la figure 2, montrant une découpe de tôles du stator présentant des encoches pour la fonction détecteur axial,
- la figure 3 est une vue montrant une variante de la figure 2B,
- la figure 4 est une vue suivant la flèche F de la figure 3,
- la figure 5 schématise le montage en pont des enroulements du détecteur radial de la figure 2B,
- la figure 6 schématise le montage en pont des enroulements des détecteurs axiaux de la figure 2C,
- la figure 7 est une vue analogue à celle de la figure 2, mais où le palier magnétique actif est de type conique à action radiale et axiale,
- la figure 8 est une vue en demi-coupe axiale d'un exemple de palier magnétique actif de l'art antérieur, et
- la figure 9 montre le phénomène de la non-coïncidence du point de détection radiale avec le point de réaction du palier radial de l'art antérieur.

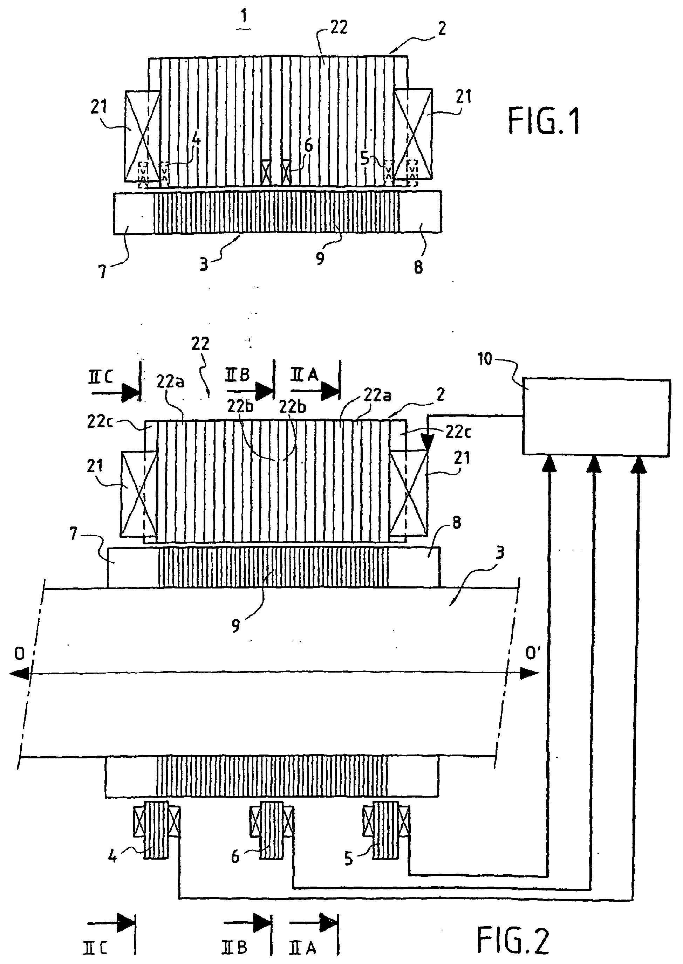

La figure 1 montre un exemple de palier magnétique actif compact 1 selon l'invention, à flux magnétique radial, destiné à équiper une machine toumante. Le palier magnétique 1 comprend un stator 2 et un rotor 3 qui sont en mouvement de rotation relatif l'un par rapport à l'autre, le rotor 3, pouvant être soit à l'intérieur, soit à l'extérieur du stator 2. Le stator 2 est équipé de bobines d'électroaimants 21, d'un empilage de tôles ferromagnétiques 22, d'un détecteur 6 de la position radiale du rotor 3, et de deux détecteurs 4 et 5 de la position axiale du rotor 3. Le rotor 3 est équipé d'un empilage de tôles ferromagnétiques 9 qui s'étend sur une longueur axiale légèrement plus grande que celle de l'empilage de tôles 22 du stator, de deux bagues massives non magnétiques 7 et 8, chacune étant située de chaque côté de l'empilage de tôles 9 du rotor. Les bagues non magnétiques 7 et 8 peuvent être par exemple en acier, en bronze ou en aluminium.

Le rotor 3 équipé de tôles ferromagnétiques 9 est maintenu par les champs magnétiques créés par les électro-aimants disposés sur le stator 2. Le rotor 3 se trouve ainsi en équilibre sans contact mécanique avec le stator 2. Sa position est repérée au moyen de détecteurs 4, 5 et 6 de préférence de type inductifs, mais pouvant également être d'un tout autre type, qui enregistrent en permanence les éventuels déplacements et qui délivrent des signaux permettant, à travers une boucle d'asservissement électronique, de piloter les courants dans les enroulements d'électroaimant 21 de telle sorte que les forces d'attraction magnétique ramènent le rotor à sa position nominale en cas de déplacement.

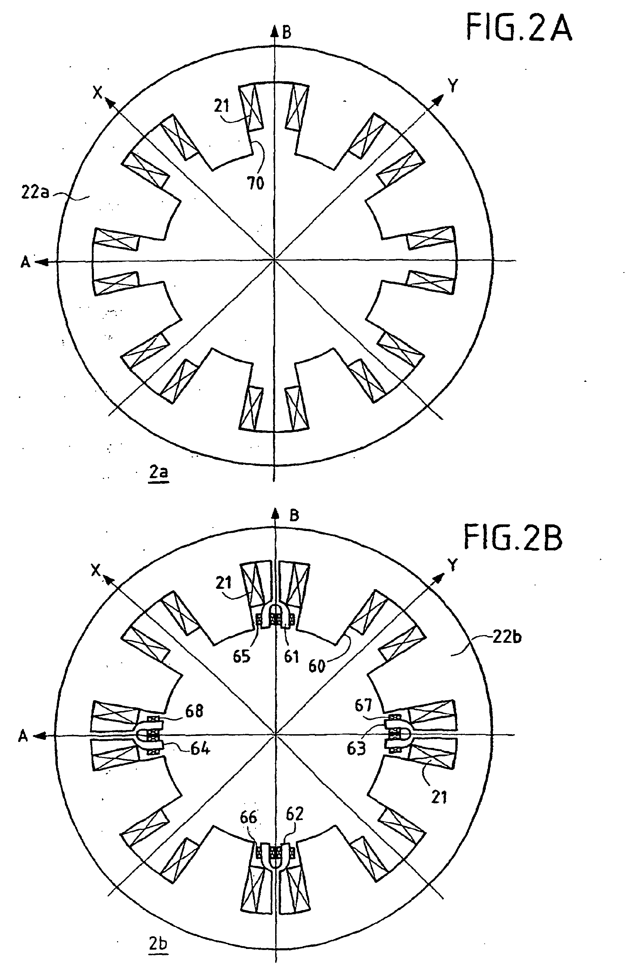

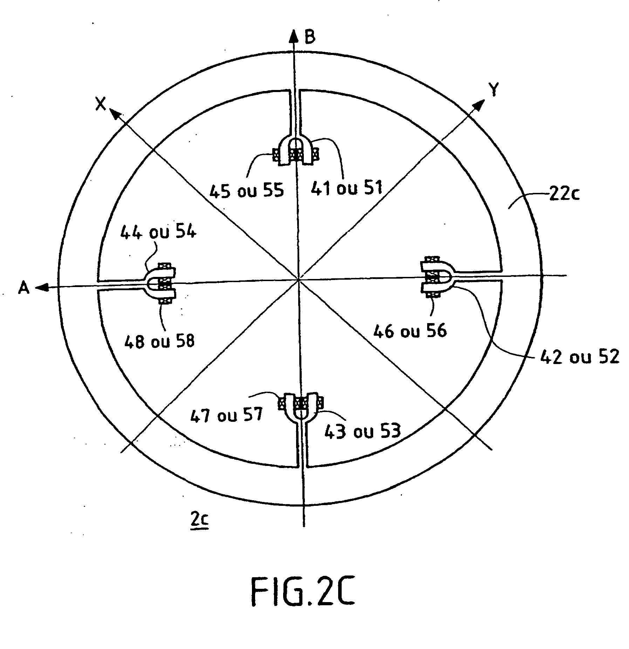

Dans l'exemple de réalisation représenté sur la figure 2, le palier magnétique comprend une culasse de stator 2 munie d'enroulements 21. La partie statorique 2 du palier magnétique coopère avec une armature en matériau ferromagnétique 9 du rotor 3, montée en regard de la culasse de stator 2 selon l'axe OO'. Au rotor un seul empilage de tôle est utilisé d'épaisseur entre 0,1mm et 0,2mm avec par exemple des tôles en fer ou en silicium. Pour la fonction palier magnétique radial, l'empilage de tôles rotoriques est légèrement plus large que l'empilage de tôles statoriques, de manière à ne pas provoquer d'échauffement dans le rotor par le palier radial. Le palier magnétique comprend aussi une butée magnétique axiale classique qui n'est pas représentée sur la figure 2 mais est commandée à partir du détecteur axial double 4, 5 intégré au palier radial.

La culasse de la partie statorique 2 est équipée d'un empilage de tôles ferromagnétiques 22. L'empilage de tôles ferromagnétiques du stator comprend successivement dans le sens axial, cinq ensembles de tôles. Un premier ensemble de tôles 2a intègre des enroulements d'électroaimant 21 du stator pour la fonction palier radial seul (figure 2A). Un deuxième ensemble de tôles 2b intègre des enroulements d'électroaimant 21 pour la fonction palier radial ainsi qu'un détecteur radial 6 (figure 28). Un troisième ensemble de tôles 2a est identique au premier ensemble de tôles 2a et intègre des enroulements d'électroaimant 21 du stator pour la fonction palier radial seul (figure 2A). Les extrémités de l'empilage de tôles ferromagnétiques 22 du stator 2 comprennent des quatrième et cinquième ensembles 2c de tôles intégrant respectivement des premier 4 et deuxième 5 détecteurs axiaux (figure 2C) et situés de part et d'autre du groupe de tôles central comprenant les premier, deuxième et troisième ensembles de tôles.

Dans le mode de réalisation de la figure 2, les détecteurs axiaux 4, 5 et le détecteur radial 6 sont de type inductif, délivrant des signaux à partir desquels le courant dans les enroulements du palier magnétique radial et de la butée magnétique axiale non représentée, est asservi à l'aide d'un circuit d'asservissement classique 10. Le but du circuit d'asservissement 10 est de contrôler la position du rotor 3 en agissant sur le courant dans les électroaimants à partir des signaux délivrés par les détecteurs de positions.

Les bagues non magnétiques 7 et 8 situées de chaque côté de l'empilage de tôles 9 du rotor 3 servent d'anneaux de référence permettant aux détecteurs axiaux 4 et 5 de déterminer avec précision la position axiale du rotor 3 par rapport à l'ensemble statorique 2. En effet, les détecteurs axiaux 4 et 5 coopèrent partiellement avec les bagues non magnétiques 7 et 8. Ainsi, lors d'un déplacement axial du rotor 3, les chevauchements partiels de chacune des bagues non magnétiques 7, 8 et de l'armature 9 du rotor 3 sont différents, de sorte que les signaux délivrés par les détecteurs axiaux 4 et 5 sont différents et permettent de fournir des informations sur la position axiale du rotor avec une double précision permettant d'asservir correctement la butée axiale pour le maintien d'une position axiale prédéterminée. Dans une position axiale nominale, les bagues non magnétiques 7, 8 s'étendent sur la moitié de l'empilage de tôles fixes des détecteurs axiaux 4 et 5 respectivement.

Le détecteur radial 6 détecte toute variation de l'entrefer c'est-à-dire de l'espace libre entre le rotor 3 et le stator 2. Le signal du détecteur 6 est ensuite comparé par le circuit d'asservissement 10 à un signal de référence définissant la position nominale du rotor 3, permettant d'asservir correctement le palier radial pour le maintien d'une position radiale au centre du stator 2 selon l'axe 00'.

Les figures 2A, 2B et 2C montrent les différentes découpes des tôles du stator 2.

La figure 2A montre une tôle 22a pouvant appartenir au premier ou au troisième ensemble de tôles 2a. La tôle 22a présente une pluralité d'encoches 70 intégrant des enroulements d'électroaimants 21 pour la fonction palier radial seul.

La figure 2B, montre une tôle 22b appartenant au deuxième ensemble de tôles 2b. La tôle 22b présente une pluralité d'encoches 60 intégrant des enroulements d'électroaimants 21 pour la fonction palier radial selon des axes X et Y. Certaines encoches orientées selon des axes A et B intercalés entre les axes X et Y comportent des dents supplémentaires 61, 62, 63 et 64, autour desquelles sont bobinés des enroulements de détection 65, 66, 67 et 68, pour la fonction détecteur radial. Le fait d'intercaler le détecteur radial entre les axes X et Y du palier radial conduit à réduire légèrement la surface utile du palier actif, d'où une perte de charge qui doit être compensée par un certain élargissement du palier. Cependant, la perte de charge reste très faible car la surface perdue correspond à un angle important par rapport à l'axe du palier, et la perte de projection sur l'axe de charge est limitée. Un calcul précis fait sur un palier réel de diamètre 150mm montre que la perte de charge due à l'intégration d'un détecteur radial fait perdre seulement de l'ordre de 10% de la charge linéique tandis que le gain en encombrement est beaucoup plus substantiel.

La figure 2C montre une tôle 22c appartenant au quatrième ou au cinquième ensemble de tôles 2c, présentant une pluralité de dents 41, 42, 43, 44 ou 51, 52, 53, 54 de la même forme, orientées selon des axes A et B intercalés entre les axes X et Y des tôles relatifs aux axes d'action du palier radial. L'ensemble de tôles présentant les dents 41, 42, 43 et 44 et intégrant des enroulements électromagnétiques 45, 46, 47 et 48 respectivement, représente le premier détecteur axial 4, tandis que l'ensemble de tôles présentant les dents 51, 52, 53 et 54 et intégrant des enroulements électromagnétiques 55, 56, 57 et 58 respectivement, représente le deuxième détecteur axial 5. La détection inductive concertée entre les deux détecteurs 4 et 5 fournit une indication de la position axiale du rotor 3.

En comparant l'encombrement axial d'un palier magnétique selon l'invention et l'encombrement axial d'un palier magnétique de l'art antérieur, on voit que le gain en longueur peut être par exemple de 34mm sur 157mm, soit un gain d'environ 22% à charge équivalente.

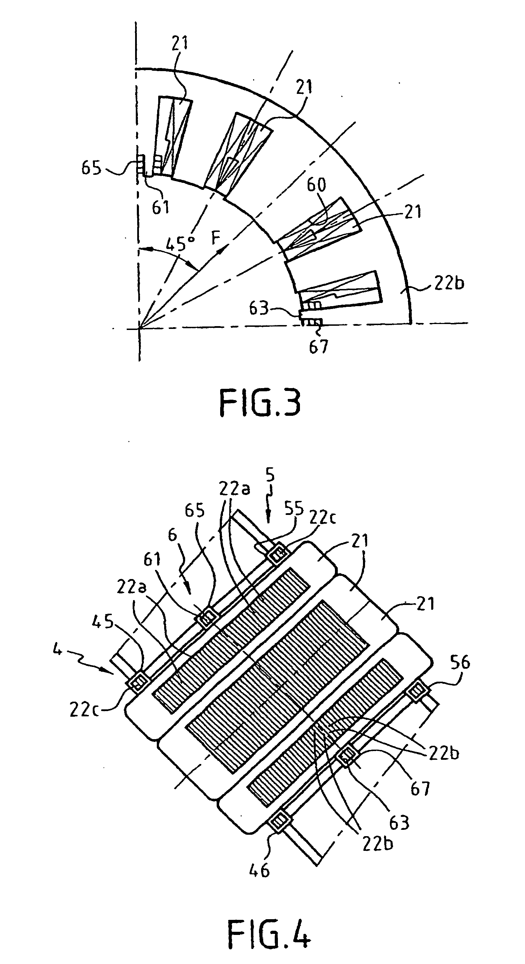

Les figures 3 et 4 montrent une forme particulière de réalisation d'un palier radial selon l'invention intégrant des détecteurs axiaux 4, 5 et un détecteur radial 6.

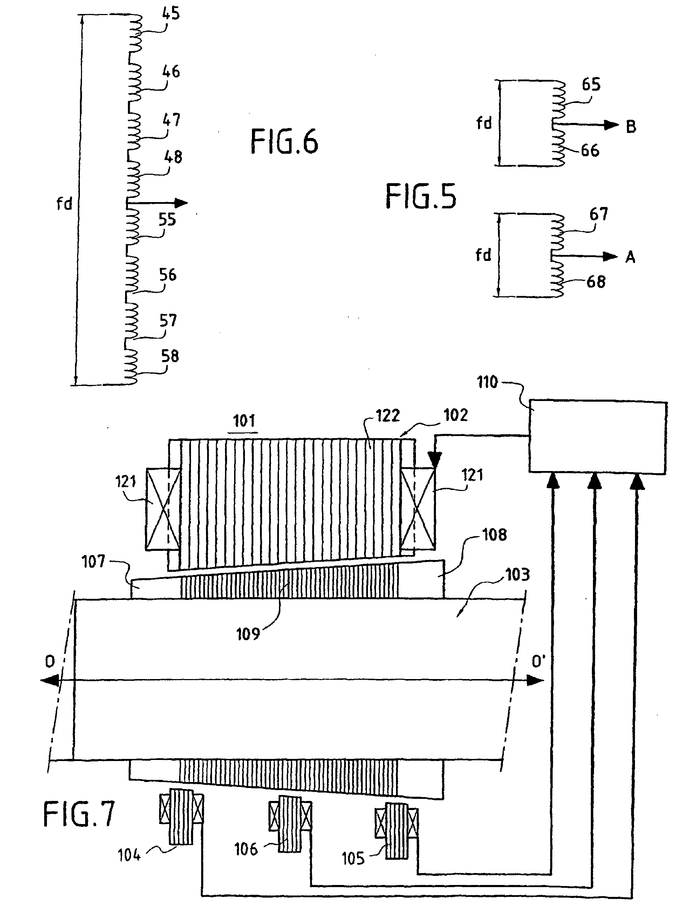

La figure 5 montre les enroulements 65, 66, 67 et 68 du détecteur radial 6 qui sont montés en pont. Les enroulements 65 et 66 donnent la détection avec suppression d'harmoniques paires selon l'axe B. Les enroulements 67 et 68 donnent la détection avec suppression d'harmoniques paires selon l'axe A. La détection selon les axes X et Y du palier radial est obtenue par la combinaison via les circuits électroniques de contrôle du circuit d'asservissement 10. La détection selon l'axe radial X est obtenue en additionnant le signal de détection selon l'axe A et le signal de détection selon l'axe B, de sorte que l'on obtient un signal X = A + B. La détection selon l'axe radial Y est obtenue en soustrayant le signal de détection selon l'axe A du signal de détection selon l'axe B, de sorte que l'on obtient un signal Y = B-A.

Les enroulements 45, 46, 47 et 48 du premier détecteur axial 4 sont montés en série, formant ainsi un premier ensemble, pour moyenner le défaut de parallélisme du flanc de la bague non magnétique contre les tôles de l'armature du rotor 3. Un deuxième ensemble est formé du montage en série des enroulements 55, 56, 57 et 58 du deuxième détecteur axial 5 situé de l'autre côté du palier. Le premier ensemble est ensuite monté en pont par rapport au deuxième ensemble. Ce montage en pont qui double la sensibilité de détection, définit aussi un point de détection virtuelle axiale située au milieu des deux couronnes de détection axiale, c'est-à-dire au milieu du palier radial au même endroit que la détection radiale. En conséquence, la détection de la position du rotor 3 par les détecteurs de position axiale et radiale 4, 5, 6 coïncide au même point que la réaction du palier magnétique actif 1. Cette coïncidence entre la détection et la réaction facilite le système de contrôle et augmente la précision de l'asservissement.

Le fait d'intégrer les détecteur axiaux et le détecteur radial à l'intérieur du palier radial pourrait augmenter les risques de couplage magnétique et électrique entre les détecteurs et le palier. Pour éviter ce couplage la fréquence de l'oscillateur *f*_{*d*} excitant les détecteurs 4, 5, 6 est découplée de la fréquence *f*_{*p*} du courant alimentant les électro-aimants du palier magnétique.

Ce découplage peut être réalisé en synchronisant la fréquence des détecteurs *f*_{*d*} et la fréquence *f*_{*p*} des électro-aimants du palier magnétique dans un rapport 1 à 2, c'est-à-dire *f*_{*d*} = *f*_{*p*}/ 2.

Cette synchronisation découple totalement les deux fonctions. Eventuellement, le découplage peut être réalisé en alimentant les paliers magnétiques à travers des filtres inductif-capacitif (LC) placés en sortie des amplificateurs pour éviter la haute fréquence de découpage des amplificateurs dans la masse métallique du palier et ainsi éviter les couplages mentionnés précédemment.

La figure 7, est une vue en coupe axiale d'un palier magnétique actif 101 selon un second mode de réalisation de l'invention. Selon ce mode de réalisation, le palier magnétique actif 101 est un palier conique à action radiale et axiale, où l'ensemble des fonctions palier axial, palier radial, détecteur axial et détecteur radial sont intégrées dans un même ensemble.

Le palier magnétique 101 comprend une culasse de stator 102 de forme conique munie d'enroulements d'électroaimants 121. La partie statorique 102 du palier magnétique coopère avec une armature de forme conique en matériau ferromagnétique 109 du rotor 103, montée en regard de la culasse de stator 102 selon l'axe OO'. La forme conique du palier magnétique génère une composante axiale du champ magnétique en plus de la composante radiale et ainsi, une butée magnétique axiale supplémentaire n'est plus nécessaire.

La culasse de la partie statorique 2 est équipée d'un empilage de tôles ferromagnétiques conique 122. L'empilage de tôles ferromagnétiques 122 du stator comprend successivement dans le sens axial, cinq ensembles de tôles. Un premier ensemble de tôles intègre des enroulements d'électroaimant 121 pour la fonction palier radial seul. Un deuxième ensemble de tôles intègre des enroulements d'électroaimant 121 pour la fonction palier radial ainsi qu'un détecteur radial 106. Un troisième ensemble de tôles intègre des enroulements d'électroaimant 121 pour la fonction palier radial seul. Les extrémités de l'empilage de tôles ferromagnétiques 122 du stator 102 comprennent des quatrième et cinquième ensembles de tôles intégrant respectivement des premier, 104, et deuxième, 105, détecteurs axiaux. Les détecteurs axiaux 104, 105 et le détecteur radial 106, délivrent des signaux à partir desquels le courant dans les enroulements du palier magnétique radial et axial est asservi à l'aide du circuit d'asservissement 110.

Les bagues non magnétiques 107 et 108 sont de forme conique et situées de chaque côté de l'empilage de tôles 109 du rotor. Ces bagues 107, 108 servent d'anneaux de référence permettant aux détecteurs axiaux 104 et 105 de déterminer avec précision la position axiale du rotor 103 par rapport à l'ensemble statorique 102.

Hormis la forme tronconique des parois du stator102 et du rotor 103 délimitant l'entrefer et le fait que le palier peut directement réagir aux signaux transmis par le détecteur radial 106 et les détecteurs axiaux 104, 105 au circuit d'asservissement 110, la configuration du stator 102 est analogue à celle du stator 2 du palier de la figure 2 et les commentaires donnés en références aux figures 2A, 2B, 2C et 3 à 6, s'appliquent également au mode de réalisation de la figure 7.

## Revendications

1. Palier magnétique actif (1 ; 101) à flux magnétique radial pour une machine tournante présentant un axe de rotation 00', le palier magnétique (1 ; 101) comprenant un stator (2 ; 102) équipé de bobines d'électroaimants (21 ; 121) et d'un premier empilage de tôles ferromagnétiques (22 ; 122) essentiellement perpendiculaires à l'axe OO', un rotor (3 ; 103) équipé d'un deuxième empilage de tôles ferromagnétiques (9; 109) essentiellement perpendiculaires à l'axe de rotation OO', des circuits d'asservissement (10 ; 110) pour maintenir en équilibre le rotor (3 ; 103) sans contact avec le stator (2 ; 102) et au moins un détecteur de la position radiale (6 ; 106) du rotor et au moins un détecteur de la position axiale (4, 5; 104, 105) du rotor, lesquels détecteurs de position radiale et de position axiale délivrent auxdits circuits d'asservissement (10; 110) des signaux à partir desquels le courant dans les électroaimants (21 ; 121) du stator (2 ; 102) est asservi ;
**caractérisé en ce que** le premier empilage de tôles ferromagnétiques (22 ; 122) du stator (2 ; 102) comprend successivement dans le sens axial, au moins un premier sous-ensemble (2a) de tôles (22a) présentant des premières encoches (70) intégrant des enroulements (21 ; 121) d'électroaimant du stator (2 ; 102), un deuxième sous-ensemble (2b) de tôles (22b) présentant à la fois des premières encoches (60) intégrant des enroulements d'électroaimant (21 ; 121) du stator (2 ; 102) et des deuxièmes encoches intégrant un détecteur radial (6 ; 106) et un troisième sous-ensemble (2a) de tôles (22a) présentant des premières encoches (70) intégrant des enroulements d'électroaimant (21 ; 121) du stator (2 ; 102), et **en ce que** le premier empilage de tôles ferromagnétiques (22 ; 122) du stator (2 ; 102) comprend en outre à ses extrémités axiales des quatrième et cinquième sous-ensembles (2c) de tôles (22c) présentant chacun des mêmes encoches intégrant respectivement des premier et deuxième détecteurs axiaux (4, 5 ; 104, 105).

2. Palier magnétique (1, 101) selon la revendication 1, **caractérisé en ce que** la détection de la position du rotor (3 ; 103) par les détecteurs de position (4, 5, 6 ; 104, 105, 106) coïncide au même point que la réaction du palier magnétique actif (1 ; 101).

3. Palier magnétique (1, 101) selon la revendication 2, **caractérisé en ce que** le deuxième empilage de tôles (9 ; 109) du rotor s'étend sur une longueur axiale légèrement plus grande que celle du premier empilage de tôles (22 ; 122) du stator.

4. Palier magnétique (1 ; 101) selon l'une quelconque des revendications 1 à 3, **caractérisé en ce que** le rotor (3 ; 103) comprend une bague massive non magnétique (7, 8; 107, 108) située de chaque côté du deuxième empilage de tôles (9 ; 109) du rotor.

5. Palier magnétique (1 ; 101) selon la revendication 4, **caractérisé en ce que** les bagues non magnétiques (7, 8 ; 107, 108) sont en acier, bronze ou aluminium.

6. Palier magnétique (1 ; 101) selon l'une quelconque des revendications 1 à 5, **caractérisé en ce que** chaque détecteur de position axiale ou radiale (4, 5, 6 ; 104, 105, 106) comprend un jeu de plusieurs éléments de détection.

7. Palier magnétique (1 ; 101) selon l'une quelconque des revendications 1 à 6, **caractérisé en ce que** chaque détecteur de position axiale ou radiale (4, 5, 6 ; 104, 105, 106) comprend un jeu de quatre éléments de détection (45, 46, 47, 48) ou (55, 56, 57, 58) ou (65, 66, 67, 68).

8. Palier magnétique (1, 101) selon l'une quelconque des revendications 6 et 7, **caractérisé en ce que** les éléments de détection sont des enroulements de type inductif.

9. Palier magnétique (1 ; 101) selon la revendication 4 et l'une quelconque des revendications 6 à 8, **caractérisé en ce que** les défauts de parallélisme des plans entre les tôles du deuxième empilage de tôles (9 ; 109) et les bagues non magnétiques (7, 8; 107, 108) sont moyennés grâce à la mise en série des éléments de détection (45, 46, 47, 48) ou (55, 56, 57, 58) de chaque détecteur axial (4, 5).

10. Palier magnétique (1 ; 101) selon l'une quelconque des revendications 1 à 9, **caractérisé en ce que** la détection de la position axiale est définie au même endroit que la détection radiale.

11. Palier magnétique (1 ; 101) selon la revendication 10, **caractérisé en ce que** les éléments de détection (45, 46, 47, 48) d'un détecteur axial (4) sont montés en pont avec les éléments de détection (55, 56, 57, 58) de l'autre détecteur axial (5).

12. Palier magnétique (1 ; 101) selon l'une quelconque des revendications 1 à 11, **caractérisé en ce que** la fréquence de l'oscillateur *f*_{*d*} excitant les détecteurs (4, 5, 6; 104, 105, 106) est découplée de la fréquence *f*_{*p*} du courant alimentant les électro-aimants du palier magnétique.

13. Palier magnétique (1 ; 101) selon la revendication 12, **caractérisé en ce que** le découplage est réalisé en synchronisant la fréquence *f*_{*d*} d'excitation des détecteurs et la fréquence *f*_{*p*} d'alimentation des électro-aimants du palier magnétique dans un rapport 1 à 2, de telle sorte que *f*_{*d*} = *f*_{*p*}/ 2.

14. Palier magnétique (1 ; 101) selon la revendication 12 ou la revendication 13, **caractérisé en ce que** le découplage est réalisé en alimentant les paliers magnétiques à travers des filtres.

15. Palier magnétique (1 ; 101) selon l'une quelconque des revendications 1 à 14, **caractérisé en ce que** l'épaisseur des tôles du deuxième empilage de tôles (9 ; 109) est comprise entre 0,1*mm* et 0,2*mm*.

16. Palier magnétique (1 ; 101) selon l'une quelconque des revendications 1 à 15, **caractérisé en ce que** le palier magnétique actif est de type radial (1).

17. Palier magnétique (1 ; 101) selon l'une quelconque des revendications 1 à 15, **caractérisé en ce que** le palier magnétique actif est de type conique (101) à action radiale et axiale.

## Patentansprüche

1. Aktives Magnetlager (1; 101) mit radialem Magnetfluß für eine elektrische Maschine mit einer Drehachse OO', wobei das Magnetlager (1; 101) einen Stator (2; 102), der mit Elektromagnetspulen (21; 121) und einem ersten Stapel von ferromagnetischen Blechen (22, 122), die im Wesentlichen zur Achse OO' senkrecht sind, ausgestattet ist, einen Rotor (3; 103), der mit einem zweiten Stapel von ferromagnetischen Blechen (9; 109), die im Wesentlichen zur Drehachse OO' senkrecht sind, ausgestattet ist, Steuerschaltungen (10; 110), um den Rotor (3; 103) ohne Kontakt mit dem Stator (2; 102) im Gleichgewicht zu halten, und mindestens einen Detektor für die radiale Position (6; 106) des Rotors und mindestens einen Detektor für die axiale Position (4, 5; 104, 105) des Rotors umfaßt, wobei die Detektoren für die radiale Position und für die axiale Position an die Steuerschaltungen (10; 110) Signale liefern, auf deren Basis der Strom in den Elektromagneten (21; 121) des Stators (2; 102) gesteuert wird;
**dadurch gekennzeichnet, daß** der erste Stapel von ferromagnetischen Blechen (22; 122) des Stators (2; 102) nacheinander in Axialrichtung mindestens eine Untereinheit (2a) von Blechen (22a), die erste Kerben (70) aufweisen, die Wicklungen (21; 121) eines Elektromagneten des Stators (2; 102) besitzen, eine zweite Untereinheit (2b) von Blechen (22b), die sowohl erste Kerben (60), die Wicklungen eines Elektromagneten (21; 121) des Stators (2; 102) besitzen, als auch zweite Kerben aufweisen, die einen Radialdetektor (6; 106) besitzen, und eine dritte Untereinheit (2a) von Blechen (22a) umfaßt, die erste Kerben (70), die Wicklungen eines Elektromagneten (21; 121) des Stators (2; 102) besitzen, und daß der erste Stapel von ferromagnetischen Blechen (22; 122) des Stators (2; 102) ferner an seinen Axialenden vierte und fünfte Untereinheiten (2c) von Blechen (22c) umfaßt, die jeweils selbe Kerben aufweisen, die erste bzw. zweite Axialdetektoren (4, 5; 104, 105) besitzen.

2. Magnetlager (1, 101) nach Anspruch 1, **dadurch gekennzeichnet, daß** die Erfassung der Position des Rotors (3; 103) durch die Positionsdetektoren (4, 5, 6; 104, 105, 106) an demselben Punkt wie die Reaktion des aktiven Magnetlagers (1; 101) erfolgt.

3. Magnetlager (1, 101) nach Anspruch 2, **dadurch gekennzeichnet, daß** sich der zweite Blechstapel (9; 109) des Rotors auf einer etwas größeren Axiallänge als jene des ersten Blechstapels (22; 122) des Stators erstreckt.

4. Magnetlager (1; 101 nach einem der Ansprüche 1 bis 3, **dadurch gekennzeichnet, daß** der Rotor (3; 103) einen nicht magnetischen massiven Ring (7, 8; 107, 108) umfaßt, der sich auf jeder Seite des zweiten Blechstapels (9; 109) des Rotors befindet.

5. Magnetlager (1; 101) nach Anspruch 4, **dadurch gekennzeichnet, daß** die nicht magnetischen Ringe (7, 8; 107, 108) aus Stahl, Bronze oder Aluminium bestehen.

6. Magnetlager (1; 101) nach einem der Ansprüche 1 bis 5, **dadurch gekennzeichnet, daß** jeder Detektor einer Axial- oder Radialposition (4, 5, 6; 104, 105, 106) einen Satz von mehreren Erfassungselementen umfaßt.

7. Magnetlager (1; 101) nach einem der Ansprüche 1 bis 6, **dadurch gekennzeichnet, daß** jeder Detektor einer Axial- oder Radialposition (4, 5, 6; 104, 105, 106) einen Satz von vier Erfassungselementen (45, 46, 47, 48) oder (55, 56, 57, 48) oder (65, 66, 67, 68) umfaßt.

8. Magnetlager (1, 101) nach einem der Ansprüche 6 und 7, **dadurch gekennzeichnet, daß** die Erfassungselemente Wicklungen induktiven Typs sind.

9. Magnetlager (1; 101) nach Anspruch 4 und einem der Ansprüche 6 bis 8, **dadurch gekennzeichnet, daß** die Parallelitätsfehler der Ebenen zwischen den Blechen des zweiten Blechstapels (9; 109) und den nicht magnetischen Ringen (7, 8; 107, 108) dank der seriellen Anordnung der Erfassungselemente (45, 46, 47, 48) oder (55, 56, 57, 58) jedes Axialdetektors (4, 5) ausgeglichen werden.

10. Magnetlager (1; 101) nach einem der Ansprüche 1 bis 9, **dadurch gekennzeichnet, daß** die Erfassung der Axialposition an derselben Stelle wie die Radialposition definiert ist.

11. Magnetlager (1; 101) nach Anspruch 10, **dadurch gekennzeichnet, daß** die Erfassungselemente (45, 46, 47, 48) eines Axialdetektors (4) mit den Erfassungselementen (55, 56, 57, 58) des anderen Axialdetektors (5) in Brücke geschaltet sind.

12. Magnetlager (1; 101) nach einem der Ansprüche 1 bis 11, **dadurch gekennzeichnet, daß** die Frequenz des Oszillators f_{d}, der die Detektoren (4, 5, 6; 104, 105, 106) erregt, von der Frequenz fₚ des Stroms, der die Elektromagneten des Magnetlagers speist, entkoppelt ist.

13. Magnetlager (1; 101) nach Anspruch 12, **dadurch gekennzeichnet, daß** die Entkopplung verwirklicht ist, wobei die Erregerfrequenz f_{d} der Detektoren und die Speisefrequenz fₚ der Elektromagneten des Magnetlagers in einem Verhältnis von 1 zu 2 synchronisiert werden, so daß f_{d} = fₚ/2.

14. Magnetlager (1; 101) nach Anspruch 12 oder Anspruch 13, **dadurch gekennzeichnet, daß** die Entkopplung durch Speisen der Magnetlager durch Filter verwirklicht ist.

15. Magnetlager (1; 101) nach einem der Ansprüche 1 bis 14, **dadurch gekennzeichnet, daß** die Dicke der Bleche des zweiten Blechstapels (9; 109) zwischen 0,1 mm und 0,2 mm beträgt.

16. Magnetlager (1; 101) nach einem der Ansprüche 1 bis 15, **dadurch gekennzeichnet, daß** das aktive Magnetlager vom radialen Typ (1) ist.

17. Magnetlager (1; 101) nach einem der Ansprüche 1 bis 15, **dadurch gekennzeichnet, daß** das aktive Magnetlager vom konischen Typ (101) mit radialer und axialer Wirkung ist.

## Claims

1. An active magnetic bearing (1; 101) with radial magnetic flux for a rotary machine presenting an axis of rotation 00', the magnetic bearing (1; 101) comprising a stator (2; 102) fitted with electromagnet windings (21; 121) and with a first stack of ferromagnetic laminations (22; 122) extending essentially perpendicularly to the axis OO', a rotor (3; 103) fitted with a second stack of ferromagnetic laminations (9; 109) extending essentially perpendicularly to the axis of rotation OO', servo-control circuits (10; 110) for maintaining the rotor (3; 103) in equilibrium without contact with the stator (2; 102), and at least one detector (6; 106) for detecting the radial position of the rotor and at least one detector (4, 5; 104, 105) for detecting the axial position of the rotor, which radial and axial position detectors deliver signals to said servo-control circuits (10; 110), and the currents carried by the electromagnets (21; 121) of the stator (2; 102) are servo-controlled on the basis of said currents;
the bearing being **characterised in that** the first stack of ferromagnetic laminations (22; 122) of the stator (2; 102) comprises in succession in the axial direction: at least a first sub-set (2a) of laminations (22a) presenting first notches (70) housing electromagnet windings (21; 121) of the stator (2; 102); a second sub-set (2b) of laminations (22b) presenting both first notches (60) housing electromagnet windings (21; 121) of the stator (2; 102) and second notches housing a radial detector (6; 106); and a third sub-set (2a) of laminations (22a) presenting first notches (70) housing electromagnet windings (21; 121) of the stator (2; 102); and **in that** the first stack of ferromagnetic laminations (22; 122) of the stator (2; 102) further comprises, at its axial ends, fourth and fifth sub-sets (2c) of laminations (22c) presenting the same notches as each other and housing respective first and second axial detectors (4, 5; 104, 105).

2. A magnetic bearing (1; 101) according to claim 1, **characterised in that** the detection point at which the position of the rotor (3; 103) is detected by the position detectors (4, 5, 6; 104, 105, 106) coincides with the point of reaction of the active magnetic bearing (1; 101).

3. A magnetic bearing (1; 101) according to claim 2, **characterised in that** the second stack of laminations (9; 109) of the rotor extends over an axial length that is slightly longer than the length of the first stack of laminations (22; 122) of the stator.

4. A magnetic bearing (1; 101) according to any one of claims 1 to 3, **characterised in that** the rotor (3; 103) includes respective solid non-magnetic rings (7, 8; 107, 108) situated at each end of the second stack of laminations (9; 109) of the rotor.

5. A magnetic bearing (1; 101) according to claim 4, **characterised in that** the non-magnetic rings (7, 8; 107, 108) are made of steel, bronze, or aluminium.

6. A magnetic bearing (1; 101) according to any one of claims 1 to 5, **characterised in that** each axial or radial position detector (4, 5, 6; 104, 105, 106) comprises a plurality of detector elements.

7. A magnetic bearing (1; 101) according to any one of claims 1 to 6, **characterised in that** each axial or radial position detector (4, 5, 6; 104, 105, 106) comprises four detector elements (45, 46, 47, 48) or (55, 56, 57, 58) or (65, 66, 67, 68).

8. A magnetic bearing (1; 101) according to claim 6 or claim 7, **characterised in that** the detector elements are inductive type windings.

9. A magnetic bearing (1; 101) according to claim 4 and any one of claims 6 to 8, **characterised in that** departures from parallelism of the planes between the laminations of the second stack of laminations (9; 109) and the non-magnetic rings (7, 8; 107, 108) are averaged by connecting the detector elements (45, 46, 47, 48) or (55, 56, 57, 58) of each axial detector (4, 5) in series.

10. A magnetic bearing (1; 101) according to any one of claims 1 to 9, **characterised in that** axial position detection is defined at the same location as radial detection.

11. A magnetic bearing (1; 101) according to claim 10, **characterised in that** the detector elements (45, 46, 47, 48) of one axial detector (4) are connected in a bridge circuit with the detector elements (55, 56, 57, 58) of the other axial detector (5).

12. A magnetic bearing (1; 101) according to any one of claims 1 to 11, **characterised in that** the frequency f_{d} of the oscillator exciting the detectors (4, 5, 6; 104, 105, 106) is decoupled from the frequency fₚ of the current fed to the electromagnets of the magnetic bearing.

13. A magnetic bearing (1; 101) according to claim 12, **characterised in that** the decoupling is performed by synchronizing the detector excitation frequency f_{d} and the feed frequency fₚ of the electromagnets of the magnetic bearing in a ratio of 1 to 2, such that f_{d} = fₚ/2.

14. A magnetic bearing (1; 101) according to claim 12 or claim 13, **characterised in that** the decoupling is performed by feeding the magnetic bearings through filters.

15. A magnetic bearing (1; 101) according to any one of claims 1 to 14, **characterised in that** the thickness of the laminations of the second stack of laminations (9; 109) lies in the range 0.1 mm to 0.2 mm.

16. A magnetic bearing (1; 101) according to any one of claims 1 to 15, **characterised in that** the active magnetic bearing is of the radial type (1).

17. A magnetic bearing (1; 101) according to any one of claims 1 to 15, **characterised in that** the active magnetic bearing is of the conical type (101) having radial and axial action.
